Europäisches Patentamt

(19) European Patent Office

Office européen des brevets

(11) Veröffentlichungsnummer: **0 100 830**
**A1**

(12) **EUROPÄISCHE PATENTANMELDUNG**

(21) Anmeldenummer: 83105300.4

(22) Anmeldetag: 28.05.83

(51) Int. Cl.³: **H 01 M 10/16**
**H 01 M 2/02**

(30) Priorität: 29.07.82 DE 3228328

(43) Veröffentlichungstag der Anmeldung:
22.02.84 Patentblatt 84/8

(84) Benannte Vertragsstaaten:
AT BE DE FR GB IT NL SE

(71) Anmelder: VARTA Batterie Aktiengesellschaft
Am Leineufer 51
D-3000 Hannover 21(DE)

(72) Erfinder: Golz, Hans-Joachim, Dr.
Kniggestrasse 1
D-3000 Hannover 1(DE)

(74) Vertreter: Kaiser, Dieter Ralf, Dipl.-Ing.
Gundelhardtstrasse 72
D-6233 Kelkheim/Ts.(DE)

(54) Mehrzelliger Bleiakkumulator mit festgelegten Plattenblöcken.

㊐ In den Zellentrennwänden (3) eines mehrzelligen Akkumulator-Blockkastens (1) sind mittels luftführender Injectionsadeln während des Spritzgießens Hohlräume (5) ausgenformt, welche im Nachhinein durch Einspritzen eines schäumbaren Kunststoffes (6), z.B. Polyurethan, aufgebläht werden können. Die dabei gebildeten Wandblasen (7) gewährleisten durch ihren Appreßdruck eine feste und dauerhafte Positionierung auch derjenigen benachbarten Plattenblöcke (bestehend aus neg. Elektroden (9), pos. Elektroden (10) und Separatoren (11)), welche wegen zu geringer Dicke das korrekte Einbaumaß für die zugehörige Zelle um die Spaltbreite (14) verfehlen.

EP 0 100 830 A1

./...

## Mehrzelliger Bleiakkumulator mit festgelegten Plattenblöcken.

Die Erfindung betrifft einen elektrischen Akkumulator, insbesondere mehrzelligen Bleiakkumulator mit einem Blockkastengehäuse, bei dem die abwechselnd aus positiven Elektroden, Separatoren und negativen Elektroden sich zusammensetzenden Plattenblöcke von geringerer Dicke sind als die Breite der zugehörigen Zellengefäße und bei dem die Plattenblöcke in den Zellengefäßen unverrückbar positioniert sind.

Erfahrungsgemäß werden bei der Montage von Akkumulatorenbatterien die zu beschickenden Zellengefäße von den bereits fertig zusammengestellten Plattenpaketen nicht immer exakt ausgefüllt. Dafür gibt es hauptsächlich drei Gründe:

Zum einen bestehen die Zelleneinbauten aus positiven und negativen Elektroden und aus Separatoren, deren Dicken Fertigungsstreuungen unterliegen. Dies führt, da ein Übermaß praktisch nicht zulässig ist, zu negativen Abweichungen vom Einbaumaß.

Zum anderen spielen die hohen Kosten für die Spritzgießwerkzeuge der Kunststoff-Garnituren (Blockkästen und Deckel) von Batterien, insbesondere Starterbatterien, und die nennenswerte Ausweitung der Typenpalette aufgrund spezieller Kundenwünsche eine Rolle.

Beide Umstände haben dazu geführt, daß man mit ein und demselben Blockkasten unterschiedliche Batterietypen mit z.B. verschiedenen Kälteprüfströmen realisiert. Dies geschieht dadurch, daß man einmal mit wenigen dicken, ein anderes Mal mit mehr dünnen Elektroden sowie unterschiedlichen Dicken der dazu gehörenden Separatoren in Zellen gleicher Länge arbeitet, wobei sich natürlich nur selten exakt gleiche Blockdicken ergeben.

Drittens hat es sich - insbesondere bei Nutzkraftwagen (NKW)-Batterien - eingebürgert, neben dem sogenannten "Vollausbau" aus Gewichts- und Kostengründen auch "Teilausbau"-Batterien herzustellen, wenn die für einen bestimmten Anwendungsfall erforderliche Kapazität kleiner ist, in die nächst kleinere zur Verfügung stehende Garnitur aber nicht mehr unterzubringen ist.

In allen Fällen - ganz besonders natürlich im letzten Fall - entstehen Freiräume, der feste Sitz der Elemente geht verloren.

Da ein fester Einbau aber für die Funktionssicherheit des Akkumulators ganz besonders auch bei Verwendung in der Elektrotraktion unabdingbar ist, hat man sich ursprünglich damit beholfen, den Plattenpaketen Beisteckscheider beizugeben, mit denen Toleranzen der Größenordnung von 1 bis 3 mm ausgeglichen werden konnten.

Im Falle 3, in dem die Abweichungen noch größer sind, verwendet man sogar speziell zu diesem Zweck hergestellte (gespritzte) Beisteckelemente.

Nach DT-Gbm 76 30 908 läßt sich anstelle des Beisteckscheiders auch eine aus einer Kunststoffolie bestehende Tasche als Füllelement benutzen, die vor dem Verdeckeln über ein Einfüllröhrchen mit z.B. schaumbildendem Polyurethan in dosierter Menge gefüllt wird. Der Vorteil gegenüber gespritzten und in ihrer Dicke vorgegebenen Beilegeteilen besteht darin, daß durch den Schaumvorgang der erforderliche Dickenzuwachs exakt erzielt wird.

Beide Verfahrensweisen sind daran gebunden, daß die Zellen manuell gefüllt werden.

Einer automatisierten Fertigung eher zugänglich ist ein in der DE-AS 25 48 813 beschriebenes Verfahren, welches die direkte Einspritzung eines Kunststoffs zwischen die Zellentrennwände bzw. Blockkastenstirnwände und die Plattensätze vorsieht, wobei das mehrkomponentige Kunststoffgemisch nach dem Einspritzen aufschäumt und aushärtet. Nachteilig ist dabei allerdings die größere Säureverdrängung und eine gewisse Abdeckung aktiver Elektrodenoberfläche durch Eindringen des Schaummittels in die Endplatten, was sich beides als Kapazitätsverminderung auswirkt.

Einen besonders festen Einbau z.B. den für HD-Batterien, hat man durch Festlegung des Plattenblocks mit Hilfe von Niederhaltern erreicht, welche sich gegen den Deckel abstützen, um so eine Relativbewegung der Bleiteile gegenüber dem Gehäuse auszuschließen.

Statt der Verwendung von Einlegeteilen hat man schließlich das Einspritzen von Polypropylen eingeführt, wobei auch hier ein Kontakt des die Platten und Scheider verbindenden gespritzten Riegels mit den Wänden vorgenommen wird, und zwar so, daß auch noch eine gewisse Abstützung mit dem später aufzuschweißenden Deckel gewährleistet wird.

Der Erfindung liegt die Aufgabe zugrunde, einen mehrzelligen elektrischen Akkumulator mit rüttelfest eingebauten Elektrodenblöcken anzugeben, der ohne Einlegeteile oder die Plattenblockdicke verstärkendes Material herstellbar und einer rationellen Fertigungsweise zugänglich ist.

Die Aufgabe wird erfindungsgemäß dadurch gelöst, daß von den jedem Zellengefäß zugehörigen Zellentrennwänden und Zellenstirnwänden des Blockkastens wenigstens eine Wand mit einem über ihren zentralen Bereich ausgedehnten und von einer Kante der Wand durch einen Kanal zugänglichen Hohlraum versehen ist, dessen Wände durch Einspritzen einer ihn auswölbenden Masse an die Plattenblöcke anpreßbar sind.

Zweckmäßig ist es, den Kanal an der Oberkante der Wand vorzusehen. Es ist jedoch auch möglich, den Kanal unten in der Trennwand des Kastens vorzusehen; dies kann sogar vorteilhaft sein, weil bekanntlich wegen der Entformungsschrägen die Trennwände unten dicker sind als oben.

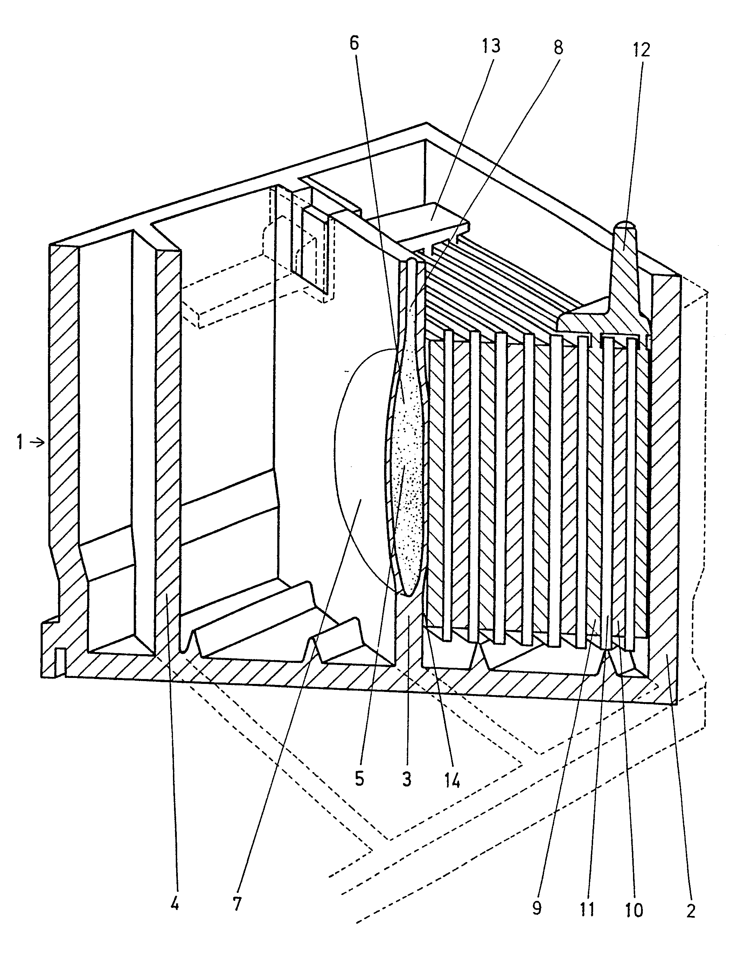

Anhand der Figur wird der Erfindungsgegenstand näher erläutert. Dargestellt ist das schräg abgeschnittene Ende eines mehrzelligen Blockkastens 1 mit seiner hinteren Stirnwand 2 und zwei Zellentrennwänden 3, 4. Die Zellentrennwand 3 weist erfindungsgemäß in ihrem mittleren Bereich einen Hohlraum 5 auf, der durch den darin verschäumten Kunststoff 6, vorzugsweise Polyurethan, aufgebläht ist, was sich nach außen in einer beidseitigen beulen- oder blasenförmigen Auswölbung der Zellentrennwand zu erkennen gibt. Um diese "Wandblase" 7 augenfällig wiederzugeben, wurde die Elektrodenbeschickung der von den Zellentrennwänden 3 und 4 abgeteilten Zelle in der Figur weggelassen. Durch den Kanal 8 wird der verschäumbare Kunststoff in den Hohlraum eingespritzt.

Das endständige Zellcompartment zwischen Blockkastenstirnwand 2 und Zellentrennwand 3 ist mit einem Plattenblock, bestehend aus negativen Elektroden 9, positiven Elektroden 10 und Separatoren 11, gefüllt. Dabei sind die negativen Elektroden an den negativen Endpol 12 und die positiven Elektroden an den Zellenverbinder 13 angeschlossen.

Wie die Figur durch den Spalt 14 erkennen läßt, wird die Zellenbreite von der Dicke des Plattenblocks nicht ganz ausgefüllt, so daß der lockere Sitz eine gravierende Gefahrenquelle bilden würde.

Diese Gefahr wird durch die erfindungsgemäße Ausführung der Zwischenwände des Blockkastens beseitigt, die es gestattet, durch Füllung vorgeformter Hohltaschen in den Wänden mit einem verschäumbaren Reaktionskunststoff das Hohlraumvolumen zu vergrößern und durch die zur Aushärtung führende Vernetzungsreaktion einen Druckaufbau zu erzeugen, welcher das Plattenpaket am Ende unter einem konstanten Verspannungsdruck hält. Dabei paßt sich die Dicke der Wandblase selbständig dem vorhandenen Abstand zwischen Plattenblock und Zellentrennwand an. Selbstverständlich können auch in den Blockkastenstirnwänden blähbare Taschen gemäß der Erfindung ausgebildet sein.

Der wesentliche Vorteil der Erfindung liegt darin, daß die Hohltasche einschließlich Einfüllkanal ein fester Bestandteil des Blockkastens ist und daß sie, da der Blockkasten in diesem Fertigungsstadium mit ausreichender Wiederholgenauigkeit positioniert werden kann, z.B. für Einspritzdüsen automatisch erreichbar ist.

Die Herstellung einer solchen wandintegrierten Tasche geschieht ebenfalls automatisch und simultan mit dem Spritzgießen des Blockkastens durch eine Injektionsnadel, die im Kernsatz der Spritzform so fest installiert ist, daß ihre Öffnung etwa in der Mitte der Zellentrennwand liegt. In der ersten Phase des Spritzvorganges, also beim Befüllen der Spritzform mit Polypropylen, muß der Druck in der Nadel dem in der Form sich aufbauenden Druck unmittelbar folgen. Dies muß geschehen, um zu gewährleisten, daß in die Kanüle der Nadel kein flüssiges Polypropylen eindringen kann, während andererseits sichergestellt sein muß, daß in dieser Phase auch noch keine Luft (oder kein Gas) aus der Kanülenspitze austreten kann.

Nach einer gewissen Zeit - nämlich dann, wenn das Polypropylen-Material an den Kernflächen bereits erstarrt ist, in der Mitte der Wände das Material aber noch im flüssigen Zustand vorliegt - ist eine definierte Menge Luft durch weitere Erhöhung des Druckes hinter der Kanüle auszutreiben.

Das dafür erforderliche Volumen rekrutiert sich aus den Schrumpfräumen, die während des Erstarrungsprozesses entstehen, wodurch ganz analog zum geringfügig schäumenden Kastenmaterial als weiterer Vorteil ein Kasten ohne die sonst üblichen Einfallstellen an den Materialansammlungsstellen (z.B. äußere Markierung der Mittelwände) entsteht.

Diese in die Zwischenwände eingelagerte Luft bildet nun eine sehr dünne, etwa 10 cm im Durchmesser große Lufttasche. Beim Entformen nach Druckentlastung bleibt diese Tasche im wesentlichen in dieser Form bestehen und ist über die durch die Nadel gebildete Öffnung für das Befüllen, mit z.B. Polyurethan, erreichbar.

Bei der Injektion des Kunststoffs in die fertige Tasche läßt es sich nicht von vornherein ausschließen, daß bei Beginn des Aufschäumens das Material an der (dünnen) Füllöffnung wieder heraustreibt. In diesem Fall wird man sich mit einem relativ langsam reagierenden Schaumstoff behelfen können, so daß das Aufschäumen erst beginnt, nachdem durch das Aufschweißen des Blockdeckels die Öffnungen zugeschweißt sind. Sollte sich das jedoch nicht erreichen lassen, bleibt die sichere Möglichkeit, gleich im Anschluß an den jeweiligen Füllvorgang die Mittelwand in diesem Bereich kurzerhand warm zu verschweißen. Gff. wird es dann nötig sein, die Wand in diesem Bereich etwas höher zu machen, um bei dem späteren Verschweißen mit dem Deckel Undichtigkeiten mit Sicherheit auszuschließen.

Reg.-Nr. HvP 107-DT

6233 Kelkheim, den 27.07.1982
TAP-Dr.Ns/schm.

VARTA Batterie Aktiengesellschaft
3000 Hannover 21, Am Leineufer 51

## Patentansprüche

1. Elektrischer Akkumulator, insbesondere mehrzelliger Bleiakkumulator mit einem Blockkastengehäuse, bei dem die abwechselnd aus positiven Elektroden, Separatoren und negativen Elektroden sich zusammensetzenden Plattenblöcke von geringerer Dicke sind als die Breite der zugehörigen Zellengefäße und bei dem die Plattenblöcke in den Zellengefäßen unverrückbar positioniert sind, dadurch gekennzeichnet, daß von den jedem Zellengefäß zugehörigen Zellentrennwänden und Zellenstirnwänden des Blockkastens wenigstens eine Wand mit einem über ihren zentralen Bereich ausgedehnten und von einer Kante der Wand durch einen Kanal zugänglichen Hohlraum versehen ist, dessen Wände durch Einspritzen einer ihn auswölbenden Masse an die Plattenblöcke anpreßbar sind.

2. Elektrischer Akkumulator nach Anspruch 1, dadurch gekennzeichnet, daß die auswölbende Masse ein schaumbildendes Kunststoffpolymer ist.

3. Elektrischer Akkumulator nach Anspruch 2, dadurch gekennzeichnet, daß das Kunststoffpolymer Polyurethan ist.

Europäisches
Patentamt

**EUROPÄISCHER RECHERCHENBERICHT**

**0100830**
Nummer der Anmeldung

EP 83 10 5300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | PATENTS ABSTRACTS OF JAPAN, Band 4, Nr. 170 (E-35)[652], 22. November 1980<br>& JP - A - 55 119 343 (NIPPON DENCHI K.K.) 13.09.1980 * Zusammenfassung * | 1 | H 01 M 10/16<br>H 01 M 2/02 |
| D,Y | DE-U-7 630 908 (VARTA)<br>* Figuren; Ansprüche 1-3 * | 1-3 | |
| A | GB-A-2 041 632 (LUCAS INDUSTRIES) | | |
| D,A | DE-A-2 548 813 (ACCUMULATORENWERK HOPPECKE CARL ZOELLNER & SOHN) | | |
| A | DE-A-2 325 849 (IST SAURE) | | |
| P,X | PATENTS ABSTRACTS OF JAPAN, Band 7, Nr. 40 (E-159)[1185], 17. Februar 1983<br>& JP - A - 57 191 964 (FURUKAWA DENCHI K.K.) 25.11.1982 * Zusammenfassung * | 1 | |
| A | FR-A-1 511 258 (KAI SJÖBLOM)<br><br>* Ansprüche 1,4; Seite 2, linke Spalte, Zeilen 10-13 * | | |

**RECHERCHIERTE SACHGEBIETE (Int. Cl. ³)**

H 01 M 10/16
H 01 M 2/02

Der vorliegende Recherchenbericht wurde für alle Patentansprüche erstellt.

| Recherchenort | Abschlußdatum der Recherche | Prüfer |
|---|---|---|
| DEN HAAG | 21-10-1983 | D'HONDT J.W. |